# EUROPEAN PATENT APPLICATION

(11) **EP 4 029 647 A1**
(43) Date of publication of application: **20.07.2022**
(21) Application number: 21020268.5
(22) Date of filing: 20.05.2021
(51) Int. Cl.: B23Q 3/155, B23B 29/00

(54) **A DEVICE FOR SAFETY GRIPPING TOOL-HOLDERS**

(30) Priority: 18.01.2021 IT 202100000791
(71) Applicant: Algra S.P.A., 24012 Val Brembilla (BG) (IT)
(72) Inventor: PESENTI, Ettore, 24012 Val Brembilla (BG) (IT)
(74) Representative: Lecce, Giovanni

(57) **Abstract**

A device for easily and safely gripping and moving the bodies (10) of a tool-holder, typically in the form of a substantially regular quadrangular prism of any size, whether motorised or non-motorised and intended, above all, for fitting onto multispindle or single-spindle numerical control lathes, transfer machines, milling centres of any type and, in general, machine tools performing chip removal; said device comprises a plurality of grooves or recesses, realised by moulding or other suitable mechanical processing on at least a part of one of the two opposite lateral faces of said bodies (10), to form a set of multiple grooves (12) in any way arranged and/or oriented.

## Description

The present invention relates to a device for safely gripping tool-holders.

More in particular, the present invention relates to a device which allows operators to easily and safely grip and move motorised or non-motorised tool-holders, destined above all for fitting onto CNC single spindle or multi-spindle lathes, transfer machines, milling centres of any kind and, in general, machine tools which perform machining by chip removal.

As is known, during the mechanical machining performed using numerical control lathes and the other machine tools indicated above, there is a need to frequently replace the various modules functional to the pieces being machined. In order to carry out these operations, operators must carry out repeated interventions to remove a tool-holder from the machine and install a replacement suitable for the next specific machining operation on the various semi-finished products. These are manual movements that are sometimes repeated many times during working hours; given that the tool-holder bodies sometimes weigh a considerable amount, more than 10 kilograms, it is difficult for the operator to grip them, also due to the fact that these pieces are soiled with lubricants, coolants and greasy materials. As a result, the tool-holder may slip out of the operator's grasp, as its surface is smooth and has no grip. Dropping such an object can cause serious injury to the operator and can damage the object itself which tends to leak coolant onto the floor. All this leads to situations that require long and costly clean-up activities, regardless of the possible injury to operators.

In order to overcome these drawbacks, recesses or shaped niches have been made on at least two opposite faces of some types of tool-holders, so as to form grips which facilitate gripping by the operator; however, this solution has not proved to be decisive, since the depth of the walls of the tool-holders which said niches are to made on is limited by the presence of Allen screws for fixing the components of the body; this prevents an adequate extension in depth of said niches, with the result that the operator, working moreover with protective gloves, does not benefit sufficiently from the grips thus created.

The purpose of the present invention is to overcome the drawbacks complained of above.

More in particular, the purpose of the present invention is to provide a tool-holder comprising a device which allows operators to easily grip and move the tool-holder in conditions of total safety, destined especially for mounting on CNC single spindle or multi-spindle lathes, transfer machines, milling centres of any kind and, in general, machine tools which perform machining by chip removal.

A further and consequent purpose of the invention is to provide a device as defined above, suitable to prevent the accidental fall of the tool-holders, not only guaranteeing the safety of the operators involved, but also obviating the consequences connected to the deterioration of the tool-holders themselves and the possible leakage of operating liquids from them.

A further but no less important purpose of the invention is to provide a device for safely gripping and moving tool-holder bodies, suitable to be made and developed on the bodies themselves in a position such as not to interfere with the fixing Allen screws of the components.

A further purpose of the invention is to is to provide a device for gripping and moving tool-holders, suitable to ensure a high level of resistance and reliability over time, in addition such as to be easily and economically made.

These and other purposes are achieved by the gripping and movement device of the present invention according to the main claim.

The construction and functional characteristics of the device of the present invention will be more clearly comprehensible from the detailed description below in which reference is made to the appended drawings/which show a preferred embodiment and some non-limiting embodiment variants, wherein:
figure 1 shows schematically in an axonometric view, a tool-holder incorporating the gripping device according to the invention;
figures 2 to 6 schematically represent as many variants with regard to the configuration of the gripping device incorporated in the tool-holder;
figure 7 schematically represents a first alternative embodiment of the gripping device of the invention, combined with a tool operable with a horizontal sliding movement with respect to the tool-holder;
figure 8 schematically represents a second alternative embodiment of the gripping device of the invention, combined with a tool operable with a horizontal and vertical sliding movement with respect to the tool-holder;
figure 9 schematically represents a third alternative embodiment of the gripping device of the invention, combined with a tool forming a gripping handle.

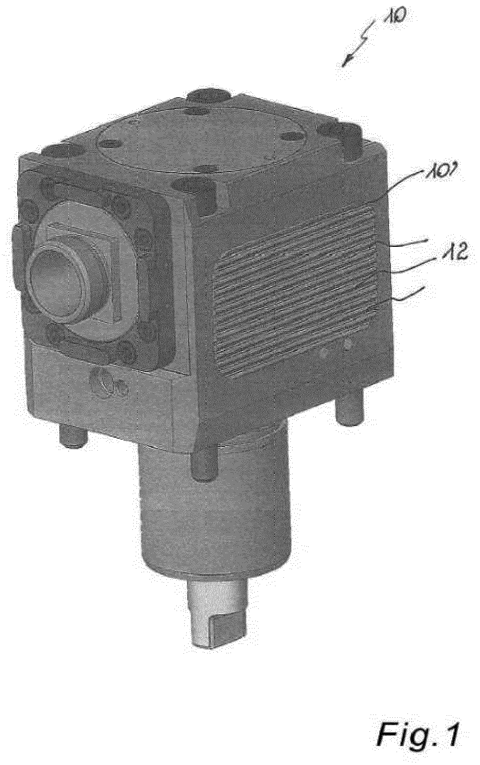

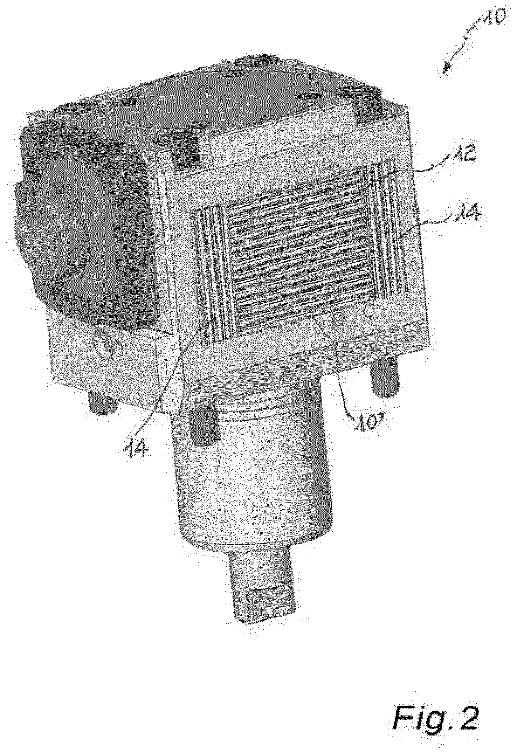

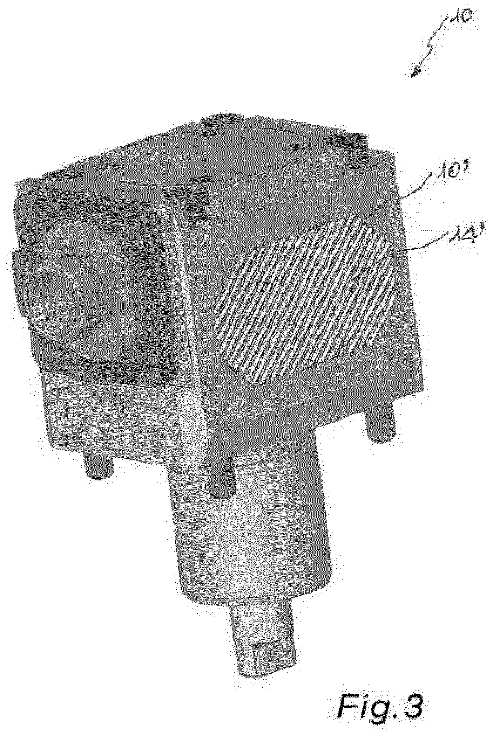

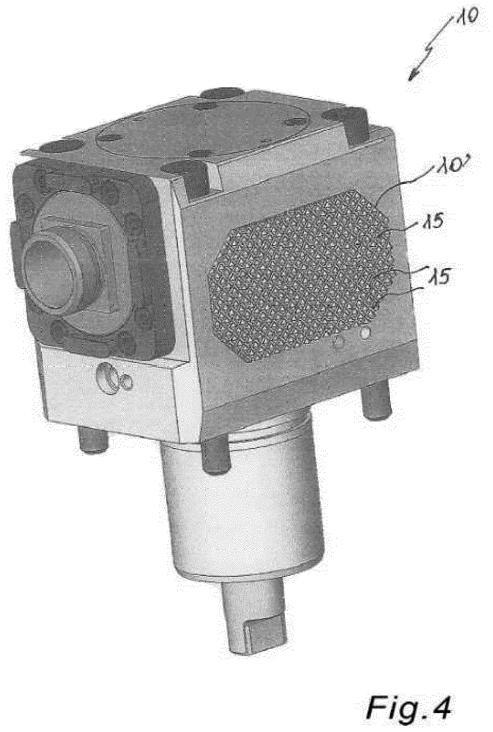

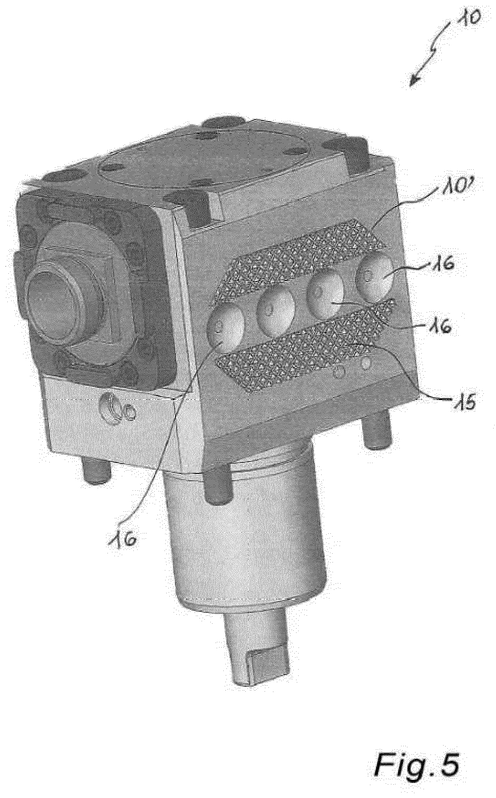

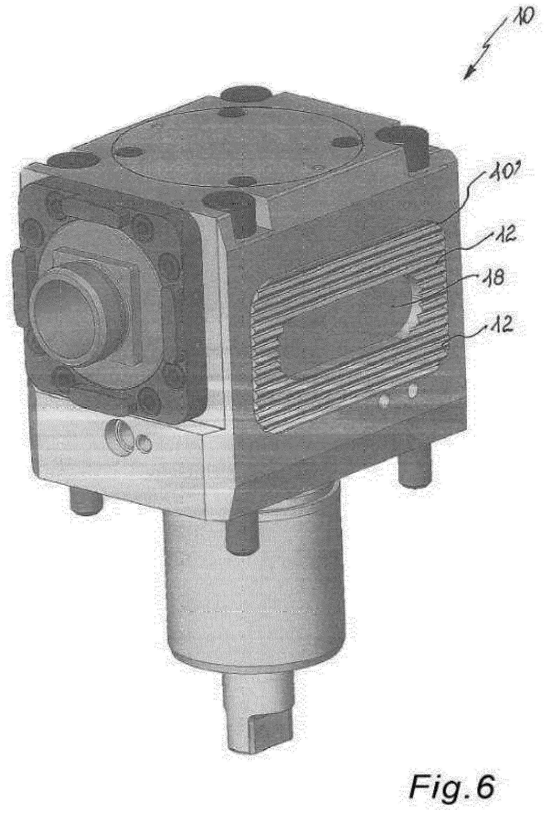

With initial reference to figure 1, the gripping device according to the invention is made on the body 10 of a tool-holder, typically in the shape of a substantially regular quadrangular prism of any size. Said gripping device consists of a plurality of grooves or recesses of constant depth, realized by moulding or by other suitable mechanical processing on at least a part of one of the two opposite lateral faces of the body 10; said recesses extend, for example, parallel to each other, defining a quadrangular, polygonal or other shape impression 10' which gives rise to a set of multiple grooves extending horizontally, globally denoted by reference numeral 12 in the same figure 1 in which they are superposed and equidistant. Overall, the grooves 12 alternating with the recesses preferably protrude from the body 10 or are inserted therein by a constant amount and, by way of example, between 0.5 and 3.0 mm. Globally, it may be envisaged that said grooves extend flush with the faces of the body 10 or that, as said, they are at least partially recessed in said faces. The arrangement of the grooves 12 can obviously be different from that illustrated in figure 1 and also comprise one or more zones, preferably of limited extension and indicated by reference numeral 14 in figure 2, in which said grooves extend in a vertical direction, or with a diagonal pattern 14' as in figure 3. The grooves in the various configurations have the function of guaranteeing a suitable grip of the body 10, avoiding the danger that the same can slide between the fingers of the operator moving it; for this purpose, further possible configurations can be provided, such as, for example, that detectable from the impression 10' of figure 4 in which the grooves cross each other 15 to form a multiplicity of small pointed prominences and an overall surface roughness that is suitable to grip the body 10 in any condition. Said impression 10' of the body 10 according to figure 5 may advantageously comprise, in addition to the crossed grooves 15 or of another form, also a group of small recesses 16 preferably with a circular layout, preferably aligned with each other horizontally, made on said body so as to divide the impression 10' bearing the crossed grooves into two parts. A further possible configuration of the gripping device according to the invention, made on at least one face of the body 10, is illustrated in figure 6; this embodiment envisages, for example, that, on the impression 10', the horizontal grooves similar to those in figure 1 are alternated with a smooth bottom depression 18, placed centrally and likewise extending horizontally, usable, if necessary, for holding in one or more fingers of the operator's hand.

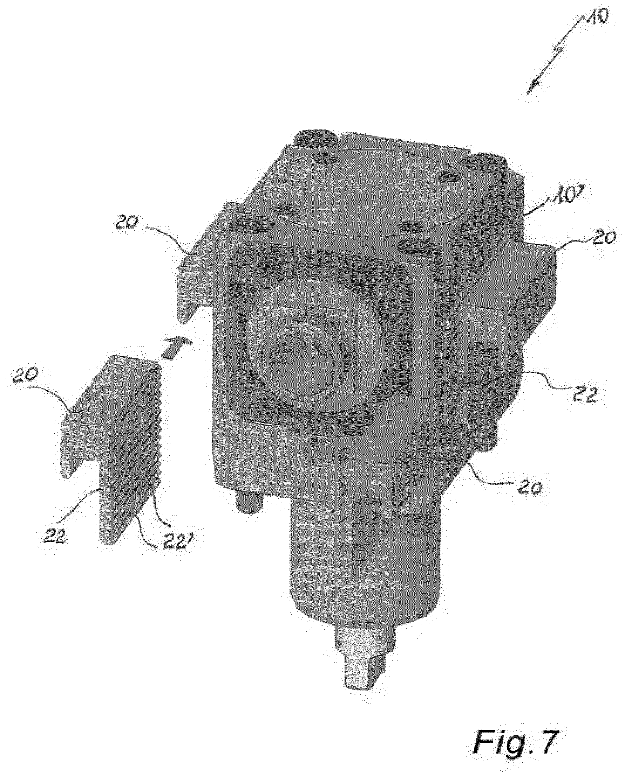

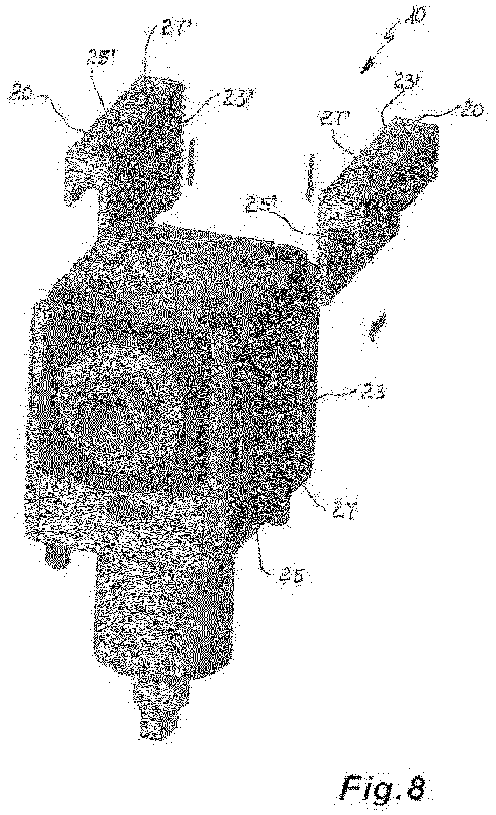

Figures 7 and 8 refer to an alternative embodiment of the gripping device of the invention, which provides for the use of a support tool particularly useful for gripping and moving the body 10 in the event that it is located adjacent to another identical or similar body either on one side or on the opposite side. In such a situation, the space existing between the various bodies is limited, so that the difficulty of handling the body 10, either to install it or to remove it from the machine tool, is significantly increased. Figure 7 shows the solution according to which the body 10 is gripped with the help of two opposite shaped supports 20, having a tendentially inverted "U" shape profile, wherein the opposite vertical arms have different extensions, the outer face of the vertical arm 22 with the greater extension being provided with horizontal grooves 22' suitable to engage with the grooves 12 present on the impressions 10' of the bodies 10 by means of horizontal sliding, shown by the arrows. After positioning said bodies 10 on the machine tool, the supports 20 according to the solution of figure 7 can be easily removed by a sliding movement opposite to the previous one. It may advantageously be envisaged that said supports 20 of figure 7 are magnetised, in order to better adhere to the body 10 once the grooves 12 and 12' are coupled together. Figure 8 illustrates the solution according to which the shaped supports 20 can slide both vertically and horizontally with respect to the body 10. In this case, different areas are made on two opposite faces of the body 10, in which the grooves are alternated with each other and diversified. In particular, each face of the body 10 comprises two lateral zones 23 and 25, extending in a vertical direction, along which both horizontal and vertical intersecting grooves are made; centrally with respect to said zones 23, 25, spaced distanced therefrom, a more extensive zone 27 being formed, on which only horizontal grooves are made. In parallel, the shaped supports 20 comprise three zones suitably spaced apart from each other, the lateral ones being denoted as 23' and 25' and the central one as 27'. Along the lateral zones 23' and 25' both horizontal and vertical intersecting each other grooves are made, while the central zone 27' comprises only horizontal grooves. Since the body 10 has to be gripped and lifted in difficult conditions, i.e. when it is adjacent to other similar bodies both on one side and on the opposite side, the shaped supports 20 are led to slide first from above in a vertical direction, in the direction indicated by the arrows, so as to couple starting from their front part 23' with the area 23 of the body 10; both of which are provided with both horizontal and vertical grooves. Continuing the sliding, this time horizontally, the supports 20 meet the horizontal grooves of the central zone 27 of the body 10 and temporarily couple with them starting from the grooves of the zone 25' of said supports 20. Further horizontal sliding brings the zones 23' and 25' of the supports 20 to couple with the grooves of the zones 23 and 25 of the body 10, while the central zone 27' automatically comes to be connected with the horizontal grooves 27 defining the handle for lifting the body 10. The operation is facilitated by the fact that both the lateral zones 23 and 25 of the body 10 and the corresponding zones 23' and 25' of the supports 20 comprise both horizontal and vertical intersecting grooves, which allow said supports 20 to be moved in the two directions so as to grip the body 10 starting from above and to lift/lower it.

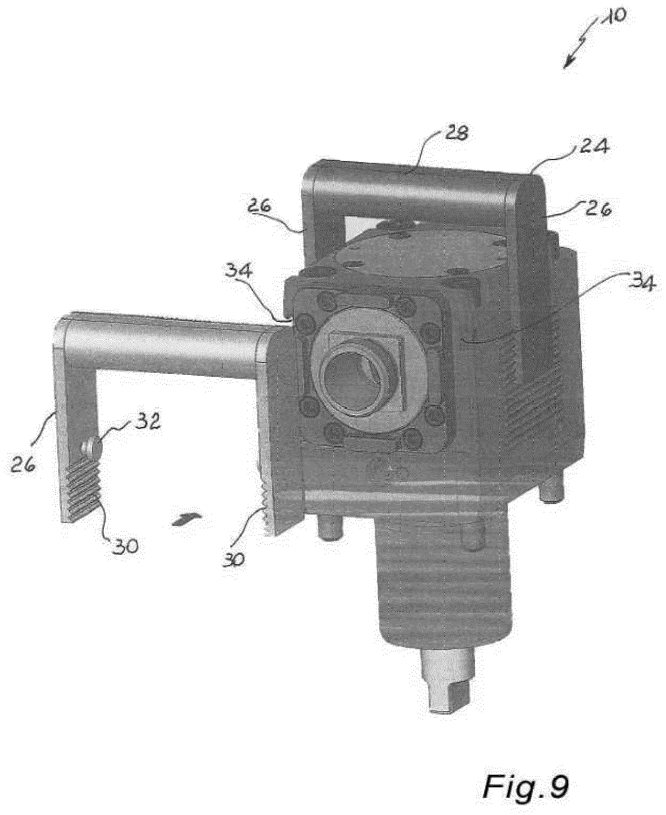

Figure 9 illustrates an alternative embodiment of the gripping device according to the invention, which is particularly useful when it comes to handling and moving bodies 10 of significant weight. According to this embodiment, the horizontal grooves 12 of the impressions 10' are combined with a bridge element 24, in which the two opposite vertical branches 26 are partly provided on the inner faces with horizontal grooves 30 complementary to those of said impressions. The bridge element 24 defines an inverted "U" shaped support, wherein the upper horizontal branch 28 connecting the opposite vertical branches 26 acts as a handle to move the body 10. In order to prevent said vertical branches 26 from splaying open, causing the detachment of the body 10 from the bridge element 24, advantageously each of said branches comprises a pawl 32, made above the grooves 30 and provided with a head having a larger diameter than the shank; the pawls 32 are designed to fit into a shaped seat 34 of the dovetail type, formed on the body 10 above the opposite impressions 10' bearing the grooves 12. Insertion is carried out by manual sliding in the direction indicated by the arrow in figure 9. In this way, the bridge element 24 remains stable and the vertical branches 26 do not move away from the body 10, which can thus be safely handled and moved. At the end of the required operation, said element 24 is easily separated from the body 10 by means of an extraction movement in the opposite direction to that of said arrow.

As may be seen from the above, the advantages which the invention achieves are evident.

In all the proposed embodiments, which can be combined with each other if necessary, the device according to the invention allows operators to easily and safely grip and move the bodies 10 of the tool-holders, avoiding the danger that they may fall to the ground with the relevant consequences described above.

Despite the invention having been described above with particular reference to one of its preferred embodiments, given solely by way of a non-limiting example, numerous modifications and variants will appear evident to a person skilled in the art in the light of the above description. The present invention therefore sets out to embrace all the modifications and variants which fall within the sphere and scope of the following claims.

## Claims

1. A device for easily and safely gripping and moving the bodies (10) of a tool-holder, typically in the form of a substantially regular quadrangular prism of any size, whether motorised or non-motorised and intended, above all, for fitting onto multi-spindle or single-spindle numerical control lathes, transfer machines, on milling centres of any type and, in general, machine tools performing chip removal, **characterised in that** it comprises a plurality of grooves or recesses, realised by moulding or other suitable mechanical processing on at least a part of one of the two opposite lateral faces of said bodies (10), to form a set of multiple grooves (12) in any way arranged and/or oriented.

2. The device according to claim 1, **characterized in that** the grooves (12) alternate with corresponding recesses and protrude from the bodies (10) or are recessed therein by a constant height of between 0.5 and 3.0 mm.

3. The device according to claim 1, **characterized in that** the grooves (12) extend horizontally and/or vertically (14) or in a diagonal (14') or crosswise (15) direction along an impression (10') quadrangular, polygonal or of another shape made on at least one of the opposite lateral faces of said bodies (10).

4. The device according to claim 3, **characterized in that** at least one impression (10') of a body (10) comprises a group of small recesses (16) aligned with each other so as to divide said impression (10') into two parts.

5. The device according to claim 4, **characterized in that** on the impression (10') comprising the horizontal grooves (12) a depression (18) with a smooth bottom is formed, centrally placed and equally extending horizontally.

6. The device according to claim 1, **characterized in that** it comprises opposite shaped supports (20), having a tendentially inverted "U" shape profile, in which the opposite vertical arms (22) have different extensions, the outer face of one of said arms (22) being provided with horizontal grooves (22') suitable to engage with the horizontal grooves (12) formed on the impressions (10') of the bodies (10).

7. The device according to claim 6, **characterized in that** the opposite shaped supports (20) are magnetized.

8. The device according to claim 1, **characterized in that** it comprises opposite shaped supports (20), having a tendentially inverted "U" shape profile, wherein said opposite vertical arms (22) have different extensions, wherein said shaped supports (20) comprise three vertically extending lateral (23') and (25') and central (27') zones suitably mutually spaced, along said lateral zones (23') and (25') both horizontal and vertical grooves intersecting each other being realized , while the central zone (27') comprises only horizontal grooves.

9. The device according to claim 1, **characterized in that** each face of the body (10) comprises two lateral zones (23) and (25), extending in a vertical direction, along which both horizontal and vertical intersecting grooves are made, centrally with respect to said zones (23), (25) and spaced distanced therefrom, a more extensive zone (27) being formed, likewise extending in a vertical direction, on which horizontal grooves are made.

10. The device according to claim 1, **characterized in that** it comprises a bridge element (24) in which the two opposite vertical branches (26) are partly provided on the inner faces with horizontal grooves (30) complementary to those formed on the impressions (10') of the bodies (10), said bridge element (24) forming an inverted "U" support in which the upper horizontal branch (28) connecting the opposite vertical branches (26) acts as a grip for moving said bodies (10).

11. The device according to claim 7, **characterized in that** each of the vertical branches (26) of the bridge element (24) comprises a pawl (32) made above the grooves (30) and provided with a head having a larger diameter than the shank, said pawls (32) being located in a shaped seat (34) formed on the body (10) above the impressions (10') bearing the grooves (12).
